# EUROPEAN PATENT SPECIFICATION

(11) **EP 2 472 162 B1**
(45) Date of publication and mention of the grant of the patent: **20.02.2019**
(21) Application number: 11173907.4
(22) Date of filing: 14.07.2011
(51) Int. Cl.: F16L 39/00

(54) **Coupling plate for a vehicle**
Kupplungsplatte für Fahrzeuge
Plaque de couplage pour véhicule

(30) Priority: 09.12.2010 GB 201020867
(43) Date of publication of application: 04.07.2012
(73) Proprietor: AGCO International GmbH, 8212 Neuhausen am Rheinfall (CH)
(72) Inventor: Knobloch, Jurgen, 87674 Immenhofen (DE)
(74) Representative: Smith, Louise Marie

(56) References cited:
- EP-A1- 1 775 159
- WO-A1-2004/031637
- WO-A1-2008/058301
- WO-A1-2009/111081
- DE-U1- 20 212 265
- DE-U1-202006 005 203

## Description

This invention relates to a coupling device for coupling and uncoupling an hydraulic piping to hydraulic connections on a vehicle. More specifically, the invention relates to a coupling plate for coupling and uncoupling hydraulic piping from a towed implement, or trailer to a rear hydraulic valve block on an agricultural machine.

Agricultural machines, such as tractors are provided with a valve block comprising a plurality of hydraulic valves for connection to hydraulic piping. The valve block is typically situated at the rear of the tractor and the hydraulic valves are provided for connection to hydraulic piping from a towed implement or trailer. The valve block is provided with hydraulic female couplings which are covered by valve covers when not in use. The hydraulic piping is provided with male couplings. The shape and the connection between female and male coupling is defined by ISO 7241-1 or ISO 5675 to ensure exchangeability between different manufacturers for towing and towed machinery. According to these international standards, the connection is provided with a ball locking mechanism to ensure that the connection remains locked under a pressure of more than 200 Newtons but at the same time can be manually disengaged by pulling on the male coupling with a relatively high force. Alternatively, the locking mechanism can be released by a valve release mechanism. It is also possible for a male or female coupling part to be integrated in the valve block to provide a locking mechanism. Typically, to connect the piping to the valves the valve covers must first be manually opened to provide access to the valves and then the male part of each hydraulic piping is coupled to the female coupling of the valve block. This can be quite time consuming.

To insert the male coupling part into the female coupling a force of approximately 200N needs to be exerted to overcome the locking and sealing mechanisms on the valves. Typically the rear valve block on a tractor is provided with four to six female couplings and when each coupling is connected to an hydraulic piping one by one, there is a risk that the wrong piping is connected to the wrong valve. One approach to this is to provide a coupling plate for simultaneously coupling and uncoupling the hydraulic pipes to respective hydraulic connections on a vehicle. Such coupling plates have a plurality of apertures each provided with a coupling assembly for holding hydraulic piping in an hydraulic connection. Examples are described in EP-A-1 775 159 and WO 2008/058301A.

However, it is not always necessary that all the valve couplings are used at the same time.

It is an aim of the present invention to overcome, or at least alleviate the problems set out above associated with the known means for coupling and uncoupling an hydraulic piping to a vehicle.

According to the invention there is provided a coupling plate for coupling and uncoupling hydraulic piping to an hydraulic connection on a vehicle, said coupling plate having a plurality of apertures, each of said apertures provided with a coupling assembly for holding hydraulic piping in an hydraulic connection and wherein the coupling assembly comprises a spring means and a body part, and wherein at least one of the coupling assemblies may be coupled or uncoupled to an hydraulic connection on a vehicle whilst another coupling assembly is coupled, characterised in that the spring means is configured to bias the body part away from the plane of the said coupling plate along an axis that is perpendicular to the plane of the said coupling plate.

Preferred features of the invention are set out in the dependent claims.

The coupling plate has the advantage that although the plate is provided with a plurality of coupling assemblies for coupling hydraulic piping to hydraulic connections on a vehicle, it is not necessary that all the coupling assemblies of the plate are coupled to the hydraulic connections at the same time. This way the user can choose the necessary assemblies to be coupled leaving one or more assemblies uncoupled.

Advantageously, the coupling assemblies on the plate open the valve covers of the vehicle connections during coupling. Thus, the attachment of the hydraulic pipes to the vehicle can be performed in a one step process, rather than the covers having to be manually opened as one process followed by the connection of the couplings in a second process.

The invention will now be described, by example only with reference to the following drawings in which:
Figures 1 shows a rear hydraulic valve block on a tractor,
Figures 2 and 3 show a rear hydraulic valve block on a tractor and a coupling plate in accordance with the invention,
Figure 4 shows the coupling assemblies of the coupling plate,
Figures 5a, 5b and 5c show movement of a coupling assembly in the plate in accordance with one arrangement of the invention,
Figures 6a and 6b show the movement of a coupling assembly in the plate in accordance with an alternative arrangement of the invention,
Figures 7a and 7b show a coupling plate according to the invention wherein the coupling assemblies are fixedly mounted to the plate,
Figures 8a and 8b show a coupling plate according to the invention wherein the coupling assemblies are releasably mounted to the plate, and
Figure 9 shows a coupling plate according to the invention wherein the coupling assemblies are releasably mounted to the plate by omega shaped springs.

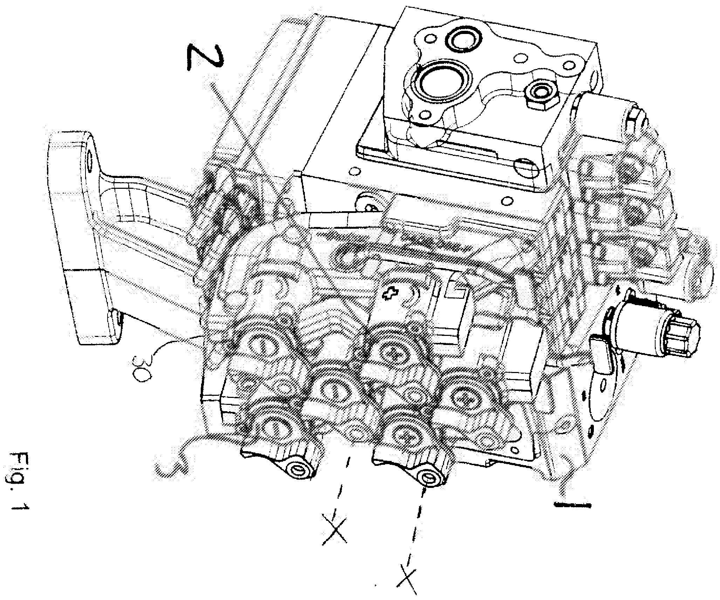

Figure 1 is a perspective view of a rear hydraulic valve block 1 on an agricultural tractor (not shown). The block comprises six valves 2 marked "+" and "-" which are used for the supply and return of hydraulic oil between the tractor and a towed implement or trailer. The "+" indicates the supply and "-" indicates the return of the hydraulic oil. A pair of "+" and "-" valves are arranged one above the other to form one hydraulic circuit for the supply and return of hydraulic oil.. Each valve 2 is provided with a female coupling contour for connection to a male coupling part on an hydraulic piping. Each valve has an associated valve cover 3 which protects the valve when not in use. Each valve cover 3 is mounted to the block 1 and is pivotable about an axis X which is parallel to the longitudinal axis of each valve. By moving the valve cover 3 sideways the valves 2 can be accessed.

The usual method to couple an hydraulic piping from a towed implement to a tractor valve 2 is to manually move the associated cover flap 3 and then manually push the male coupling part of the piping into the required valve 2. A force of around 200N must be applied to each valve for successful connection. The connection time is significant if each valve 2 is to be connected to a hydraulic piping one by one. There is always a risk of connecting the wrong piping to the wrong valve, especially when it is dark and the pipings are muddy. To disconnect a piping coupled to a valve, the male part is either pulled out manually, whereby the force applied opens the locking mechanism, or the block is provided with a valve release mechanism which ejects the male part.

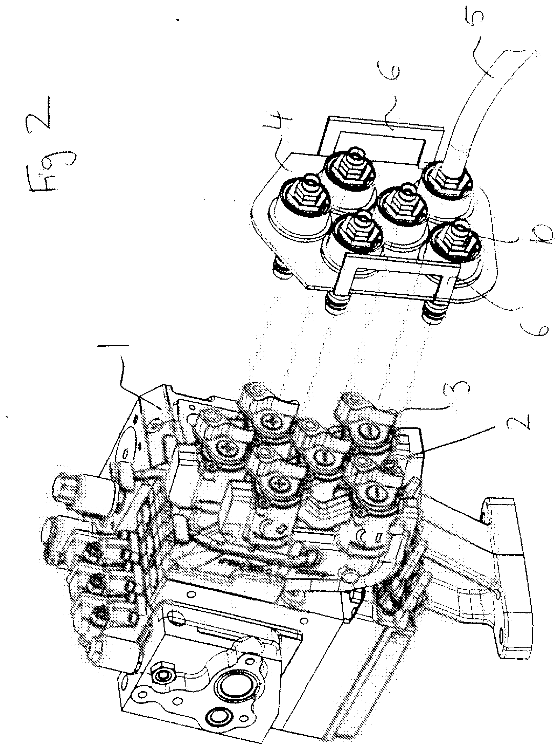

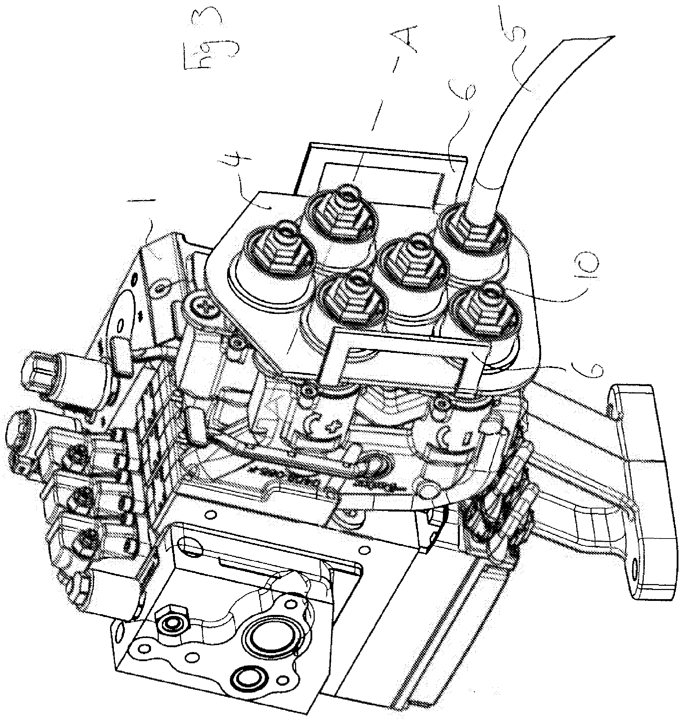

Figures 2 and 3 are perspective views of a rear hydraulic valve block 1 and the coupling plate 4 in accordance with the invention. In figure 2 the coupling plate is not coupled to the valve block 1. In figure 3 the coupling plate 4 is coupled to the valve block 1.

The coupling plate 4 is a sheet of material made from a metallic, or plastics material which is provided with six circular apertures fitted with six coupling assemblies 10. In the example shown, plate 4 is provided with six coupling assemblies although a plate could be provided with fewer, or more coupling assemblies. It is anticipated that plate 4 would be provided with at least two coupling assemblies for connection to supply and return connections on a valve block. The coupling assemblies 10 are used to connect hydraulic piping 5 from a towed implement, or trailer for example to valves 2. The plate is also provided with two handles 6.

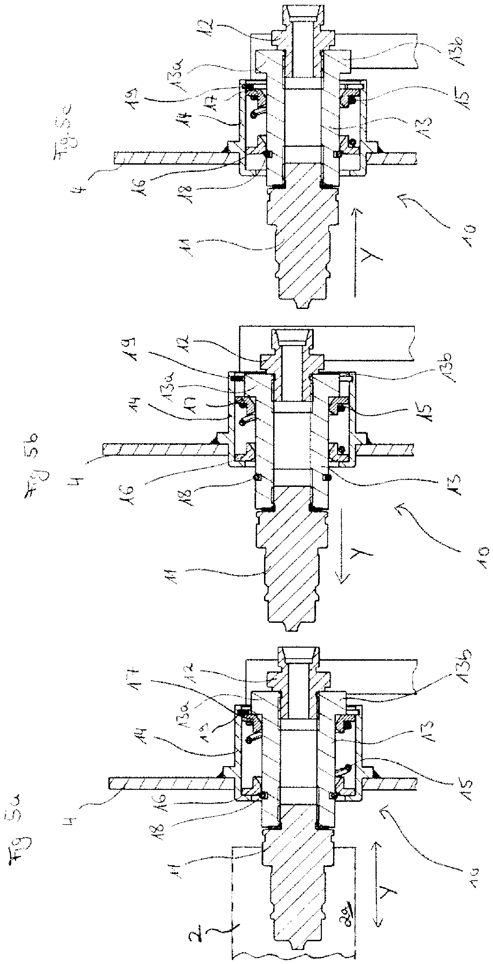

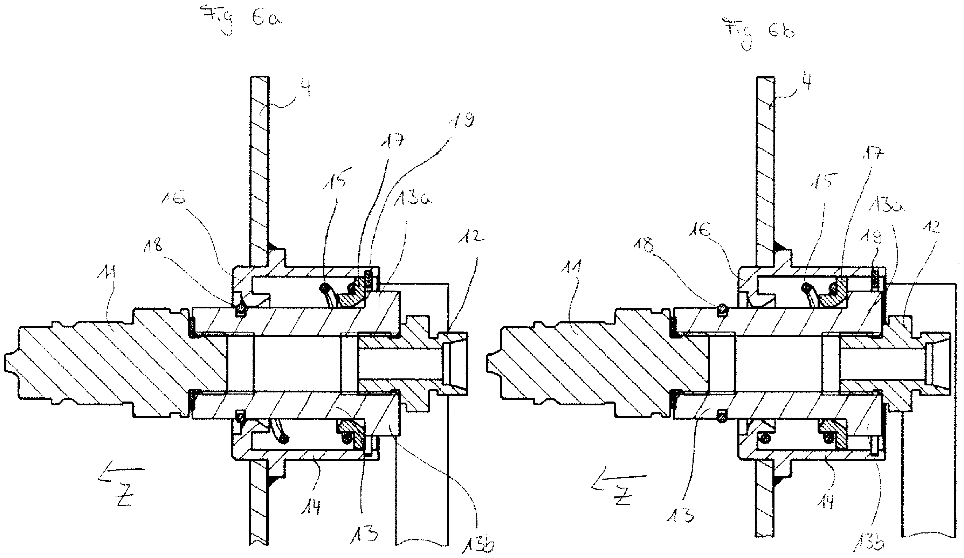

The coupling assemblies which are shown in more detail in figures 5a, 5b, 5c, 6a and 6b comprise spring means and are attached to the plate 4 so that they are moveable relative to the plate in a plane perpendicular to the plane of the plate. The assemblies comprise a male coupling part for connection to the valves 2.

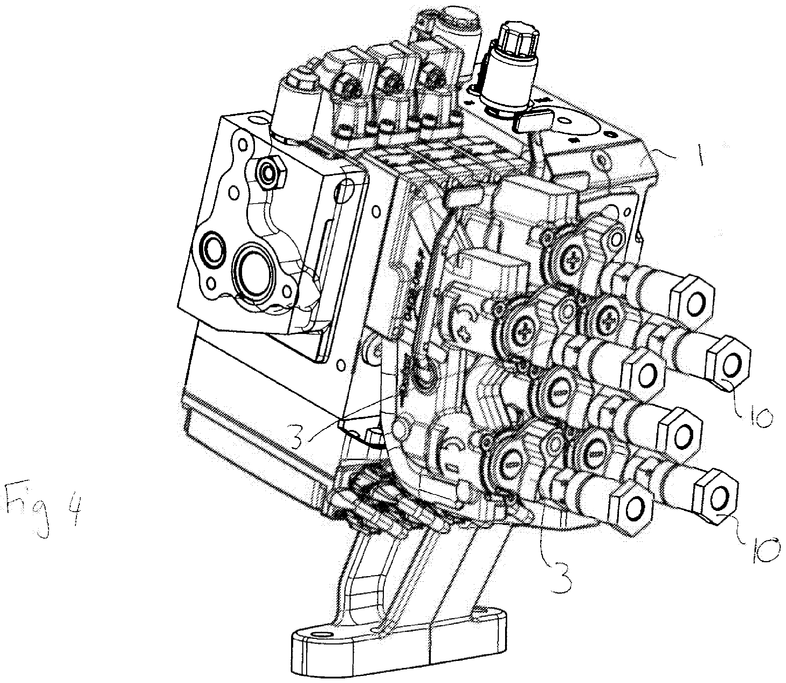

To couple hydraulic piping 5 to the valve block 1 the piping is connected to the desired coupling assembly 10 on the plate 4. Using handles 6, the plate and the coupling assemblies are brought into contact with the valve covers 3. By moving the plate 4 slightly sideways the coupling assemblies 10 can pivot the valve covers 3 to provide access to the valves 2. This is shown more clearly in figure 4 where the coupling assemblies 10 are shown contacting the valve covers 3. The plate and piping have been omitted from figure 4. Once the male coupling parts in the plate 4 are aligned with the valves, a force is applied to each of the coupling assemblies where coupling to the hydraulic connections is required. It may be that not all hydraulic connections require coupling in which case no force is applied to the associated coupling assembly. The coupling assembly is spring assisted and pushes the male part into the valve 2.

Figures 5a, 5b and 5c are cross sectional views of the coupling plate taken along line A-A of figure 3. The coupling assembly fitted to the plate is moveable in two axial directions perpendicular to the plane of the plate as indicated by arrow Y. Such a coupling assembly may be used, for example when the valve block is provided with or without a valve release mechanism.

Figure 5a is a cross sectional view of a coupling plate 4 provided with a coupling assembly 10 which may or may not be coupled to a valve 2 which is depicted by broken lines. The coupling assembly 10 comprises a male coupling part 11 for connection with a female coupling contour 2a of a valve 2 on a valve block (not shown). Contour 2a provides a ball locking mechanism as defined by ISO 7241-1 or ISO 5675.

The coupling assembly 10 has a screw fitting 12 for connection to a piping (not shown) and a body part 13 which connects the male coupling part 11 to the screw fitting 12. Body part 13 is provided with a shoulder 13a. Body part 13 is connected to assembly housing 14 which can be attached to plate 4 by welding means, or releasably attachable means. A coiled spring 15 is provided around body part 13. Body part 13 is provided with left pusher 16 and right pusher 17 which are in contact with the spring 15 at either end. Body part 13 is also provided with a snap ring 18. A locking washer 19 is provided within housing 14 to hold right pusher 17 and therewith spring 15 within housing 14.

In figure 5a the coupling assembly 10 can be said to be in one of two different coupling conditions:
Condition 1 is an uncoupled state which occurs when none of the coupling assemblies 10 on the plate are in contact with the valves 2, for example when the coupling assemblies are not in use and the coupling assemblies are not connected.
Condition 2 is a coupled state which occurs when all coupling assemblies on the plate are coupled to valves 2. If one of the coupling assemblies is not connected, this coupled state is not possible.

Essentially, in both conditions, the coupling assemblies are in the same position as shown in Fig 5a.

Both the male coupling part 11 and screw fitting 12 are screwed into the body part 13 with a sealant. Coupling part 11, screw fitting 12 and body part 13 are moveable within housing 14 in a direction perpendicular to the plane of the plate 4 indicated by arrow Y. In figure 5a, the spring 15 is in its rest position being not compressed.

In figure 5b the coupling part is being moved towards the valve 2 (not shown) in the direction indicated by the arrow Y. This is done by a person exerting a force on screw fitting 12. Shoulder 13a moves the right pusher 17. The left pusher 16 is kept in position by the housing 14. The spring 15 is compressed along its longitudinal axis in the direction Y and body part 13 and the attached male coupling part 11 are moved towards valve 2. When male coupling part 11 enters valve 2 the female coupling contour 2a and the male coupling part 11 are engaged and locked by a ball locking mechanism. Surface 13b is painted an eye catching colour. If the colour is visible, shoulder 13a has not moved enough to the left indicating that there is no coupling between part 11 and valve 2. A user may couple one or more coupling assemblies by applying a force to each screw fitting 12 one by one. If all six coupling assemblies 10 are successfully coupled the body part 13 moves back to condition 2 of the state shown in figure 5a and the spring 15 returns back to its rest position.

Figure 5c shows the uncoupling of part 11 from the valve (not shown) from the coupled state. Movement of part 11 is in the direction indicated by the arrow Y. When male coupling part 11 is released from the valve 2 body part 13 is pulled by screw fitting 12. This spring 15 is compressed and male part is pulled away from valve 2. When screw fitting 12 is released, the right pusher 17 is kept in position by locking washer 19 in the housing 14 and snap ring 18 is in contact with left pusher 16 to contract spring 15 in the opposite direction to arrow Y. If all six coupling assemblies 10 are uncoupled they return to condition 1 as shown in figure 5a, that is the uncoupled state and thus the spring 15 is in its rest position. Body part 13 is thus retracted to its initial state.

Figures 6a and 6b are cross sectional views of the coupling plate taken along line A-A of figure 3. The plate 4 is fitted with a coupling assembly which is moveable in one axial direction only indicated by arrow Z. Such a coupling assembly may be used, for example when a valve block is provided with a valve release mechanism.

The decoupling is achieved by a valve release mechanism 30 (best seen in Figure 1) on the valve block 1 (not shown). Figures 6a and 6b are similar to those in figures 5a, 5b and 5c and same reference numerals are used for the same parts. In figures 6a and 6b however the housing 14 and left pusher 16 are one integral part. As a result male coupling part 11 cannot move to the right. From the coupled state shown in Figure 6a it is not possible for male coupling 11 to move to the right, because snap ring 18 is in contact with the left pusher 16 and no more movement to the right is possible.

Figure 6b shows the movement of male part to the left to couple with a valve (not shown). Shoulder 13a moves the right pusher 17 compressing spring 15. To decouple the coupling assembly each valve release mechanism 30 on each valve 2 is activated. This results in part 11 being pushed out of the valve 2.

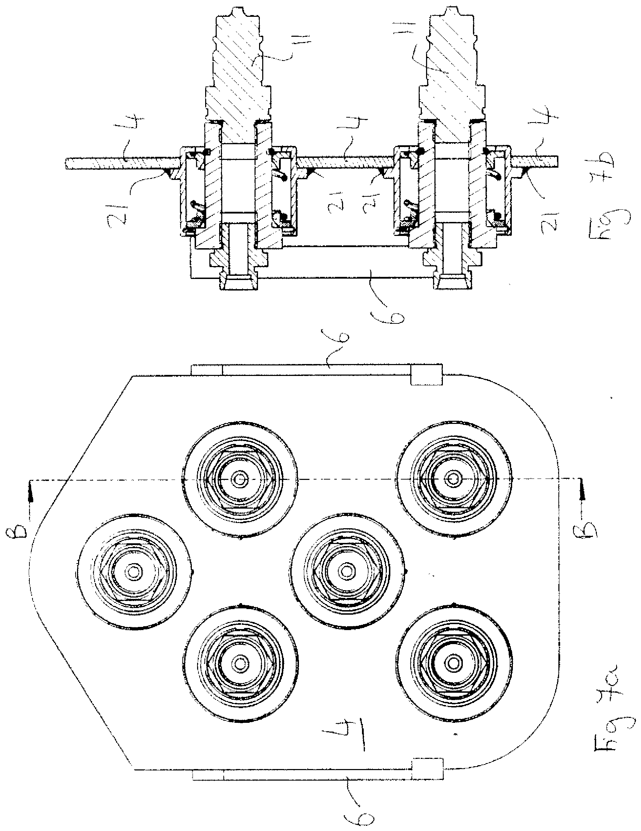

The coupling assembly may be mounted to the plate by welds 21 as shown in figures 7 a and 7b. Figure 7a is a plan view of the other side of plate 4 to that shown in figure 2. Figure 7b is a cross sectional view of figure 7a along line B-B.

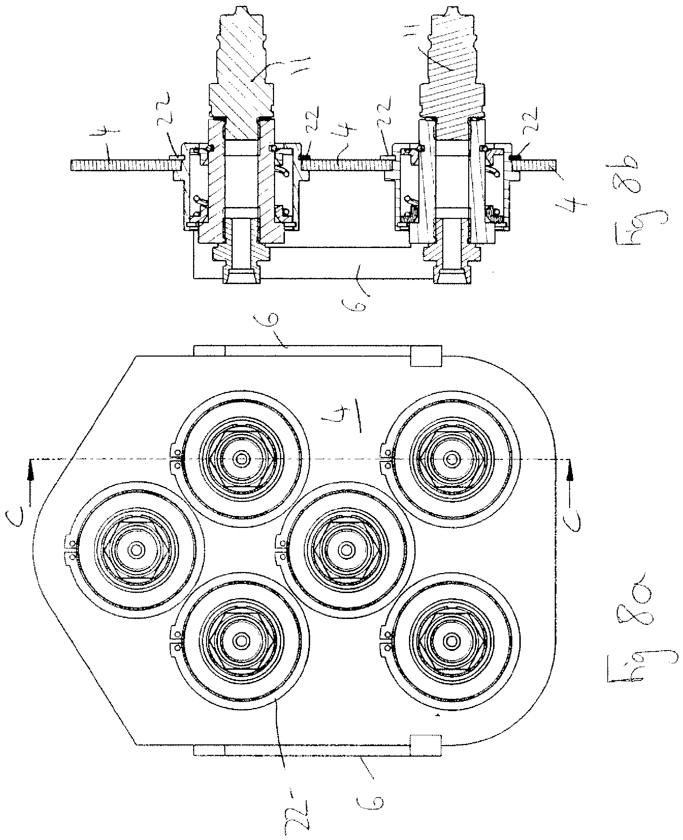

Alternatively, the coupling assembly may be releasably attached to the coupling plate by snap fastenings, such as snap rings 22 as shown in figures 8a and 8b. Figure 8a is the same view of the plate 4 as in figure 7a. Figure 8b is a cross sectional view of figure 8a along line C-C. This means that the coupling assemblies can be used with different plates.

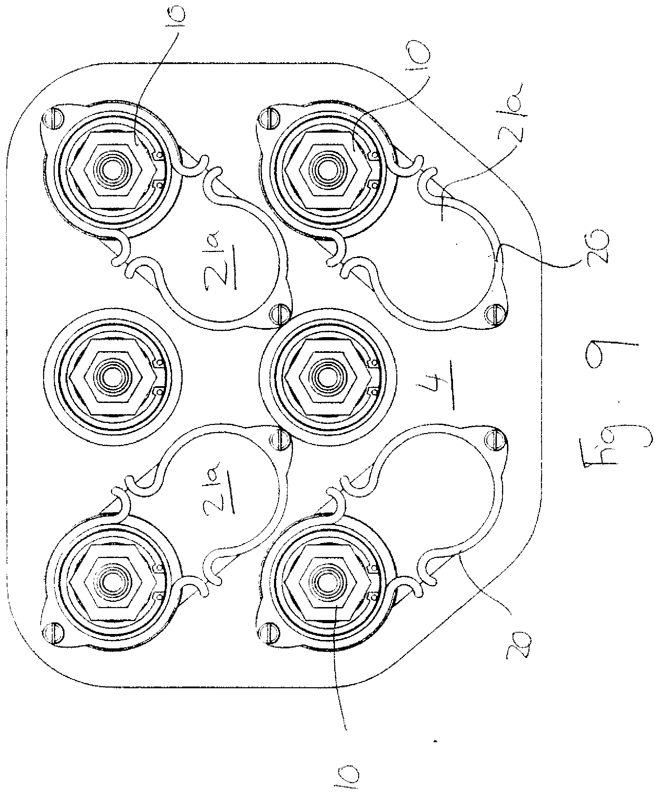

In a further arrangement of the invention as shown in figure 9, plate 4 may be provided with longitudinal apertures 21a so that the coupling assembly 10 can be provided in a different position within the aperture 21a. Omega shaped springs 20 are used to attach the coupling assemblies 10 to the plate 4. This arrangement makes it quick and easy to change the position of the coupling assembly 10 within the plate 4 which may be necessary if a valve block has a different valve configuration.

In figures 6a and 6b the female coupling contour 2a is integrated in the valve 2. It is envisaged that a non-integrated female coupling part may alternatively be used.

The coupling plate 4 may also be provided with means to attach other connectors, for example for the supply of other fluids or electricity. Advantageously the hydraulic couplings are connected first to the hydraulic piping and the plate attached to the valves on the tractor. The other connectors can then be easily attached to associated tubing/cables and associated connection means on the tractor.

## Claims

1. A coupling plate (4) for coupling and uncoupling hydraulic piping (5) to an hydraulic connection (2) on a vehicle, said coupling plate (4) having a plurality of apertures, each of said apertures provided with a coupling assembly (10) for holding hydraulic piping in an hydraulic connection and wherein the coupling assembly (10) comprises a spring means (15) and a body part (13), and wherein at least one of the coupling assemblies (10) may be coupled or uncoupled to an hydraulic connection (2) on a vehicle whilst another coupling assembly is coupled, **characterised in that** the spring means (15) is configured to bias the body part (13) away from plane of the said coupling plate (4) along an axis that is perpendicular to the plane of the said coupling plate (4).

2. A coupling plate (4) as claimed in claim 1, said coupling assembly (10) having means (2a) for receiving a ball type locking mechanism.

3. A coupling plate (4) as claimed in claim 2 wherein the ball type locking mechanism is defined according to ISO 7241-1 or ISO 5675.

4. A coupling plate (4) as claimed in any preceding claim wherein the aperture is provided with snap attachment means (18) for releasably attaching the coupling assembly (10) thereto.

5. A coupling plate (4) as claimed in any preceding claim wherein the aperture is circular.

6. A coupling plate (4) as claimed in any of claims 1 to 4 wherein the aperture (21a) is of an elongate shape allowing the position of the coupling assembly (10) within the aperture to be changed.

7. A coupling plate (4) as claimed in claim 6 wherein the elongate aperture (21a) is provided with two omega shaped springs (20) allowing the position of the assembly (10) to be held in two different positions within the elongated aperture (21a).

8. A coupling plate (4) as claimed in any preceding claim wherein the coupling assembly (10) is releasably attached to the coupling plate (4).

9. A coupling plate (4) as claimed in any preceding claim wherein said coupling assembly (10) is moveable relative to the plate (4) in a direction perpendicular to the plane of the plate.

10. A coupling plate (4) as claimed in any preceding claim wherein the spring means (15) is compressed by movement of the coupling assembly (10) in one direction during coupling and compressed in an opposite direction during de-coupling.

11. A coupling plate (4) as claimed in any preceding claim wherein the plate (4) is provided with means for opening a cover associated with each hydraulic connection on the vehicle.

12. A coupling plate (4) as claimed in any preceding claim for use with a valve block (1) on an agricultural tractor.

## Patentansprüche

1. Verbindungsplatte (4) zum Verbinden und Trennen hydraulischer Rohrleitungen (5) mit bzw. von einem Hydraulikanschluss (2) an einem Fahrzeug, wobei die Verbindungsplatte (4) eine Mehrzahl von Öffnungen aufweist, die jeweils eine Verbindungseinheit (10) zum Halten der hydraulischen Rohrleitungen in hydraulischer Verbindung aufweisen, und wobei die Verbindungseinheit (10) ein Federmittel (15) und ein Körperteil (13) aufweist, und wobei mindestens eine der Verbindungseinheiten (10) mit einem Hydraulikanschluss (2) an dem Fahrzeug verbunden oder von diesem getrennt werden oder sein kann, während eine andere Verwendungseinheit (10) verbunden wird oder ist, **dadurch gekennzeichnet, dass** das Federmittel (15) zum Beaufschlagen des Körperteils (13) weg von der Ebene der Verbindungsplatte (4) entlang einer Achse ausgebildet ist, die senkrecht zu der Ebene der Verbindungsplatte (4) verläuft.

2. Verbindungsplatte (4) nach Anspruch 1, wobei die Verbindungseinheit (10) ein Mittel (2a) zum Aufnehmen eines Kugelkopfverriegelungsmechanismus aufweist.

3. Verbindungsplatte (4) nach Anspruch 2, wobei der Kugelkopfverriegelungsmechanismus gemäß ISO 7241-1 oder ISO 5675 definiert ist.

4. Verbindungsplatte (4) nach einem der vorhergehenden Ansprüche, wobei die Öffnung mit einem Schnappverbindungsmittel (18) zum lösbaren Befestigen der Verbindungseinheit (10) daran versehen ist.

5. Verbindungsplatte (4) nach einem der vorhergehenden Ansprüche, wobei die Öffnung kreisförmig ist.

6. Verbindungsplatte (4) nach einem der Ansprüche 1 bis 4, wobei die Öffnung (21a) eine langgestreckte Gestalt besitzt, die die Veränderung der Position der Verbindungseinheit (10) in der Öffnung gestattet.

7. Verbindungsplatte (4) nach Anspruch 6, wobei die langgestreckte Öffnung (21a) zwei Omega-förmige Federn (20) aufweist, die das Halten der Position der Einheit (10) in zwei unterschiedlichen Positionen in der langgestreckten Öffnung (21a) gestatten.

8. Verbindungsplatte (4) nach einem der vorhergehenden Ansprüche, wobei die Verbindungseinheit (10) lösbar an der Verbindungsplatte (4) befestigt ist.

9. Verbindungsplatte (4) nach einem der vorhergehenden Ansprüche, wobei die Verbindungseinheit (10) relativ zu der Platte (4) in einer Richtung senkrecht zu der Ebene der Platte beweglich ist.

10. Verbindungsplatte (4) nach einem der vorhergehenden Ansprüche, wobei das Federmittel (15) durch eine Bewegung der Verbindungseinheit (10) in eine Richtung während des Verbindens und in einer entgegengesetzten Richtung während des Trennens zusammengedrückt wird.

11. Verbindungsplatte (4) nach einem der vorhergehenden Ansprüche, wobei die Platte (4) ein Mittel zum Öffnen eines Deckels aufweist, der mit jedem Hydraulikanschluss an dem Fahrzeug verknüpft ist.

12. Verbindungsplatte (4) nach einem der vorhergehenden Ansprüche zur Verwendung mit einem Ventilblock (1) an einem landwirtschaftlichen Traktor.

## Revendications

1. Plaque d'accouplement (4) pour accoupler et désaccoupler une tuyauterie hydraulique (5) à un raccord hydraulique (2) sur un véhicule, ladite plaque d'accouplement (4) ayant une pluralité d'orifices, chacun desdits orifices étant pourvu d'un ensemble d'accouplement (10) pour maintenir la tuyauterie hydraulique dans un raccord hydraulique et dans laquelle l'ensemble d'accouplement (10) comprend un moyen de ressort (15) et une partie de corps (13), et dans laquelle au moins l'un des ensembles d'accouplement (10) peut être accouplé à ou désaccouplé d'un raccord hydraulique (2) sur un véhicule tandis qu'un autre ensemble d'accouplement est accouplé, **caractérisée en ce que** le moyen de ressort (15) est configuré pour solliciter la partie de corps (13) à l'écart d'un plan de ladite plaque d'accouplement (4) le long d'un axe qui est perpendiculaire au plan de ladite plaque d'accouplement (4).

2. Plaque d'accouplement (4) selon la revendication 1, ledit ensemble d'accouplement (10) ayant un moyen (2a) pour recevoir un mécanisme de verrouillage de type à bille.

3. Plaque d'accouplement (4) selon la revendication 2, dans laquelle le mécanisme de verrouillage de type à bille est défini selon la norme ISO 7241-1 ou ISO 5675.

4. Plaque d'accouplement (4) selon l'une quelconque des revendications précédentes, dans laquelle l'orifice est pourvu d'un moyen de fixation encliquetable (18) pour fixer de façon détachable l'ensemble d'accouplement (10) à celui-ci.

5. Plaque d'accouplement (4) selon l'une quelconque des revendications précédentes, dans laquelle l'orifice est circulaire.

6. Plaque d'accouplement (4) selon l'une quelconque des revendications 1 à 4, dans laquelle l'orifice (21a) est de forme allongée permettant de changer la position de l'ensemble d'accouplement (10) au sein de l'orifice.

7. Plaque d'accouplement (4) selon la revendication 6, dans laquelle l'orifice allongé (21a) est pourvu de deux ressorts en forme d'oméga (20) permettant de maintenir la position de l'ensemble (10) dans deux positions différentes au sein de l'orifice allongé (21a).

8. Plaque d'accouplement (4) selon l'une quelconque des revendications précédentes, dans laquelle l'ensemble d'accouplement (10) est fixé de façon détachable à la plaque d'accouplement (4).

9. Plaque d'accouplement (4) selon l'une quelconque des revendications précédentes, dans laquelle ledit ensemble d'accouplement (10) est mobile par rapport à la plaque (4) dans une direction perpendiculaire au plan de la plaque.

10. Plaque d'accouplement (4) selon l'une quelconque des revendications précédentes, dans laquelle le moyen de ressort (15) est comprimé par un déplacement de l'ensemble d'accouplement (10) dans une direction pendant un accouplement et comprimé dans une direction opposée pendant un désaccouplement.

11. Plaque d'accouplement (4) selon l'une quelconque des revendications précédentes, dans laquelle la plaque (4) est pourvue de moyens pour ouvrir un capot associé à chaque raccord hydraulique sur le véhicule.

12. Plaque d'accouplement (4) selon l'une quelconque des revendications précédentes pour son utilisation avec un bloc de vannes (1) sur un tracteur agricole.
